# EUROPEAN PATENT SPECIFICATION

(11) **EP 1 581 139 B1**
(45) Date of publication and mention of the grant of the patent: **22.06.2016**
(21) Application number: 03783012.2
(22) Date of filing: 17.12.2003
(51) Int. Cl.: A61C 8/00

(54) **DEVICE AND ARRANGEMENT FOR FIXTURE INSTALLATION**
VORRICHTUNG UND ANORDNUNG ZUR INSTALLATION EINES FIXIERTEILS
DISPOSITIF ET SYSTEME DE POSE D'UN ELEMENT DE RETENUE

(30) Priority: 30.12.2002 SE 0203898
(43) Date of publication of application: 05.10.2005
(73) Proprietor: Nobel Biocare Services AG, 8058 Zürich-Flughafen (CH)
(72) Inventor: BRAJNOVIC, Izidor, S-416 77 Göteborg (SE)
(74) Representative: Jensen, Olaf Sven
(86) International application number: PCT/SE2003/001975
(87) International publication number: WO 2004/058093

(56) References cited:
- WO-A1-97/49351
- WO-A1-02/053055
- WO-A1-02/053057
- SE-C2- 508 662
- US-A- 4 998 881

## Description

The present invention relates to a device and arrangement for installation of a fixture in a jaw bone. The arrangement comprises a fixture holder designed to cooperate with a guide member forming part of a template, via which guide member the fixture can be applied in its position in the jaw bone with the aid of the fixture holder. The arrangement is also provided with one or more elements which, with the aid of the guide member, ensure defined positions of the fixture in the vertical and transverse directions. The invention also relates to an arrangement for installation of two or more fixtures which can be installed in the jaw bone in a corresponding manner.

The present invention is intended to be used in, among other things, the arrangement sold by Nobel Biocare AB for ARK operations (Absolute Rehabilitation Kit). Reference is made, inter alia, to the PCT applications WO 02/053055 A1, WO 02/053056 A1 and WO 02/053057 A1 filed by the same Applicant and with the same inventor as for the present patent application.

It is already known, in existing installation arrangements, to use a device which functions as a separate unit and by means of which the fixtures are applied in their necessary and correct positions in the vertical direction and the transverse directions (tilt direction). In installation work performed by practiced doctors, it sometimes happens that the separate device is not used, which means there is a risk that the necessarily precise positions of the fixtures in the jaw bone will not be obtained. Without using the separate device (fixture guide), the fixtures can easily end up in positions which are too deep, with the result that the produced bridge which is to be applied to the fixtures does not fit them. It is also easy for the fixtures to be pulled obliquely, for example if the bone structure in the formed hole does not have the same density throughout. This too can result in poor or impossible fitting of the dental bridge which is to be installed. The present invention aims to solve these problems inter alia.

In fixture installations using previously known auxiliary devices, problems can also arise if the installation work is drawn out over time. The known separate device has an application and function which mean that the previously used fixture holder must first be removed before the necessary removal of the separate device could take place. Given said time consideration, this means that soft tissue parts of the jaw bone can start to grow over the implant in a relatively short time, so that these become difficult to identify in the subsequent bridge installation work. The invention also solves this problem.

SE508662 discloses a holder for an anchoring element having a flange that can be pressed against a surface of a bone.

WO03071972 relates to a method and device for placing implants using a surgical template which is made from tomographic cuts in the patient's jawbone.

WO9749351 discloses components used when mounting a superstructure of a dental prosthesis system.

The invention is defined by independent claim 1.

An element or elements is or are arranged on the fixture holder itself.

In a preferred embodiment, there is a first element in the form of an outwardly protruding stop member which, when the fixture is at its defined position in the vertical direction, can be applied against a top surface of the guide member of the template. The stop member can have the form of an outwardly protruding flange. In one embodiment, the fixture holder can have a part which protrudes above the template and guide member, and by means of which or via which the fixture and the fixture holder are held together by a screw in a rotatable manner. A second element can be in the form of a part having an outer surface arranged to cooperate with an opposite inner surface of the guide member in order to define the transverse position of the fixture. The compulsory application of the fixture holder in the fixture installation in this way guarantees the precisely defined positions of the fixture in the vertical and transverse directions in the jaw bone. The fixture can also be designed so that, in the position in which it gives the fixture defined positions in the vertical and transverse directions, it can be left there for a time preventing jaw bone, for example the soft tissue of the jaw bone, from growing over what would otherwise be an exposed fixture end.

That which can principally be regarded as characterizing an arrangement of the type mentioned at the outset is that all of the fixture holders for two or more fixtures each have their own element or elements.

Further developments of this inventive concept are set out in the attached dependent claims which refer back to the independent arrangement claim.

By means of what has been proposed above, the aforementioned problems are given technically simple solutions which exclude the omission of the necessary functions of vertical and transverse direction determination. The new components can easily be incorporated in the already existing techniques, thus avoiding reconfiguration and extra costs.

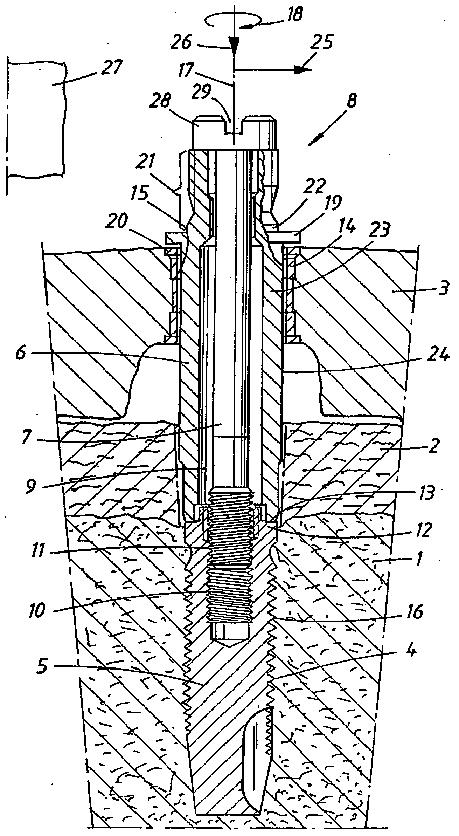

Presently proposed embodiments of a device and an arrangement having the characteristic features of the invention will be described below with reference to the attached drawing, in which:
the- figure shows a longitudinal section through a fixture applied in a jaw bone with the aid of a fixture holder which has members for defining the position of the fixture in the vertical and transverse directions.

In the figure, reference number 1 designates a jaw bone, and reference number 2 designates gum (mucosa) or soft tissue. A template of a type known per se is arranged on top of the soft tissue, in which connection reference may be made to the PCT specifications mentioned above. A hole/drilled hole 4 has been formed in the jaw bone in a manner known per se. A fixture 5 has been applied in the hole, and the application has been performed with the aid of a fixture holder 6 which assumes an assembled state with the fixture, which state has been obtained with the aid of a screw 7 extending from the upper parts 8 of the fixture holder, through the fixture holder in an inner recess 9 formed therein, and down into a thread 10 in the fixture. The screw 7 is provided with an outer thread 11 via which the screw can be screwed into the thread 10 of the fixture which is an inner thread. The fixture is provided with an upper flange 12 against which an end surface 13 of the fixture holder 6 can be applied. This application means that the jaw bone or dentine 1, 2 cannot grow in across the fixture end which is directed upward toward the fixture holder. The template 3 comprises a guide member in the form of a sleeve 14 which is provided with a recess 15. In the assembled state with the fixture holder 6, the implant can be applied in its position in the drilled hole 4 via the recess 15. The fixture is provided with an outer thread which can cooperate with the wall of the drilled hole 4 upon simultaneous rotation of the assembled fixture and fixture holder. The rotation takes place about the assembled unit 5, 6. The rotation takes place in a clockwise direction of rotation 18 when screwing into the jaw bone.

In accordance with the concept of the invention, the fixture holder is provided with elements in the form of a stop member 19 which can consist of an outwardly protruding flange. When the implant has been screwed in to its full extent, the stop member cooperates with a top surface of a flange 20 on said sleeve-like guide member. The cooperation between the flanges 19 and 20 means that a stop is provided for the degree of screwing of the fixture into the jaw bone 1. The part of the fixture holder protruding above the flange 19 is designated by 21. Said part 21 can be provided with a wrench grip 22 so that the fixture can be screwed into the jaw bone easily. The fixture holder is also provided with a part 23 which has an outer surface which can cooperate with the inner surface 15 of the guide member 14. The last-mentioned cooperation is thus such that there is precision in the transverse direction 25 or tilt direction of the assembled unit 5, 6. The stop member 19 ensures the fixture's precise positioning in the vertical direction, which has been indicated by 26 in the figure.

By means of the invention, the fixture 5 can be assigned an exact position in the vertical direction and transverse direction. The play between the surfaces 15 and 24 is extremely small, for example 0.05 mm. The stop member 1 and the sleeve 14 function with corresponding precision. When the fixture, after its application, has fused with the jaw bone, the holder 6 can be removed by undoing the screw 7 from the thread 10. In bridge installations there are two or more fixtures 5, and a preferred embodiment is one in which the fixture holder is left in place at all installation points until the last installation has been completed. Removal of the fixture holders can be done in a short time which, for example, avoids gum 2 growing in across the end surface 12 of the respective fixture. Upon removal of the fixture holders, the template is also removed and a bridge, indicated symbolically by 27, can be placed in a manner known per se on the fixtures. In one embodiment there are two or more fixture installations of the type shown in the figure. As the installations can look the same or similar, only one installation has been shown in the figure. The screw 7 is provided, likewise in a manner known per se, with a screw head 28 and a screwdriver slot 29, and the screw head lies with its underside against a top surface of the upwardly protruding part 21. By means of the invention, it is possible to apply the finished bridge immediately after the fixtures have been installed, even though osteointegration may take several months. By means of the invention, the outer shape of the fixture holder can be adapted so that it corresponds to the previously used separate unit (fixture guide) and can be guided through the sleeve of the template right down to the bottom. The problem of the fixture possibly lying too deep and of the bridge not fitting is solved in accordance with the above because it is not possible to install the fixture without the fixture holder.

### Embodiment A

A device and arrangement for installation of a fixture (5) in a jaw bone (1) is disclosed. The arrangement, on the one hand, comprises a fixture holder (6) designed to cooperate with a guide member (14) forming part of a template (3), via which guide member (14) the fixture can be applied in its position in the jaw bone with the aid of the fixture holder, and, on the other hand, is provided with one or more elements (19 and 23, 24) which, with the aid of the guide member, ensure defined positions of the fixture in the vertical and transverse directions (25, 26). The element or elements is or are arranged on the fixture holder.

A first element (19) of the device has the form of an outwardly protruding stop member which, when the fixture is at its defined position in the vertical direction (26), can be applied against a top surface (20) of the guide member (14).

The stop member has the form of an outwardly protruding flange.

The fixture holder has a part (21) which protrudes above the template and guide member, and by means of which or via which the fixture and the fixture holder are held together by a screw (7) in a rotatable manner.

A second element (23) of the device in the form of a part having an outer surface (24) is arranged to cooperate with an opposite inner surface (15) of the guide member (14) in order to define the transverse position (25).

The compulsory application of the fixture holder in the fixture installation guarantees the defined positions of the fixture in the vertical and transverse directions in the jaw bone (1).

The fixture holder is designed so that, in the position in which it gives the fixture (5) defined positions in the vertical and transverse directions, it can be left there for a time preventing jaw bone, especially the soft tissue (2) of the jaw bone, from growing over what would otherwise be an exposed fixture end.

### Embodiment B

An arrangement for installation of two or more fixtures is disclosed. The arrangement comprises, for each fixture, a fixture holder (6) designed to cooperate with a guide member (14) forming part of a template (3), via which guide member (14) the fixture can be applied in its position in the jaw bone with the aid of the fixture holder, and, on the other hand, provided with one or more elements (19 and 23, 24) which, with the aid of the guide member, ensure defined positions of the fixture in the vertical and transverse directions (25, 26). All of the fixture holders each have their own respective element(s).

The fixture holders of he arrangement are designed so that, in the positions in which they give the fixtures defined positions in the vertical and transverse directions, they can be left there for a time causing jaw bone, for example soft tissue, to grow over what would otherwise be exposed fixture ends.

All the fixture holders of the arrangement are detachable and a final bridge installation (27) can be applied within a period in which there is no time for overgrowing of the jaw bone/soft tissue to take place, making it easy to identify application points for the bridge installation (27).

The invention is not limited to the embodiment shown above by way of example, and instead it can be modified within the scope of the attached patent claims and the inventive concept.

## Claims

1. In combination, at least two fixtures (5) for installation in a jawbone (1), a template (3), a fixture holder (6) for each fixture designed to cooperate with a guide member (14) of the template (3) and configured to be assembled with the fixture with the aid of a screw (7), and a bridge, wherein
- the fixture holder includes:
i. an outwardly protruding flange (19) which, when the fixture is at its defined position in the vertical direction (26), can be applied against a top surface (20) of the guide member (14), and
ii. a part (23) having an outer surface (24) arranged to cooperate with an opposite inner surface (15) of the guide member (14) in order to define the transverse position (25), and
- the apical end of the fixture holder (6) extends beyond the template (3) when the fixture is at its defined position in the vertical direction (26),
- **characterized in that** said screw (7) is designed to extend from the upper part (8) of the fixture holder (6), through the fixture holder (6) into an inner recess formed therein, and down into a thread (10) in the fixture (5).

2. The combination as claimed in claim 1, **characterized in that** the fixture holder has a part (21) which protrudes above the template and guide member, and by means of which or via which the fixture and the fixture holder are held together by the screw (7).

3. The combination as claimed in any of the previous claims, wherein the fixture holder (6) is configured for detachable assembling with the fixture by means of the screw.

4. The combination as claimed in claim 3, said screw having a screw head (28) and a screw driver slot (29) arranged in the screw head.

5. The combination as claimed in any of the previous claims, wherein the fixture holder (6) comprises an end surface (13) and the fixture comprises an upper flange (12), against which said end surface is configured to be applied.

## Patentansprüche

1. In Kombination, mindestens zwei Haltevorrichtungen (5) zur Anbringung in einem Kieferknochen (1), eine Matrize (3), ein Haltevorrichtungshalter (6) für jede Haltevorrichtung, der zur Zusammenwirkung mit einem Führungselement (14) der Matrize (3) ausgelegt ist und zum Zusammenbau mit der Haltevorrichtung mithilfe einer Schraube (7) aufgebaut ist, und eine Brücke, wobei
- der Haltevorrichtungshalter einschließt:
i. einen nach außen hervorstehenden Flansch (19), der, wenn die Haltevorrichtung an ihrer definierten Position in der vertikalen Richtung (26) ist, gegen eine obere Oberfläche (20) des Führungselements (14) angelegt werden kann, und
ii. einen Teil (23), der eine äußere Oberfläche (24) aufweist, die zur Zusammenwirkung mit einer entgegengesetzten inneren Oberfläche (15) des Führungselements (14) eingerichtet ist, um die Querposition (25) zu definieren, und
- das apikale Ende des Haltevorrichtungshalters (6) sich über die Matrize (3) hinaus erstreckt, wenn die Haltevorrichtung an ihrer definierten Position in der vertikalen Richtung (26) ist,
- **dadurch gekennzeichnet, dass** die Schraube (7) zur Erstreckung von dem oberen Teil (8) des Haltevorrichtungshalters (6), durch den Haltevorrichtungshalter (6) in eine innere Ausnehmung, die darin gebildet ist, und hinab in ein Gewinde (10) in der Haltevorrichtung (5) ausgelegt ist.

2. Kombinationen gemäß Anspruch 1, **dadurch gekennzeichnet, dass** der Haltevorrichtungshalter einen Teil (21) aufweist, der über die Matrize und das Führungselement hervorsteht und mittels dessen oder durch den die Haltevorrichtung und der Haltevorrichtungshalter durch die Schraube (7) zusammengehalten werden.

3. Kombination gemäß einem der vorhergehenden Ansprüche, wobei der Haltevorrichtungshalter (6) zum lösbaren Zusammenbau mit der Haltevorrichtung mittels der Schraube aufgebaut ist.

4. Kombination gemäß Anspruch 3, wobei die Schraube einen Schraubenkopf (28) und einen Schraubendreherschlitz (29), der in dem Schraubenkopf angeordnet ist, aufweist.

5. Kombination gemäß einem der vorhergehenden Ansprüche, wobei der Haltevorrichtungshalter (6) eine Endoberfläche (13) umfasst und die Haltevorrichtung einen oberen Flansch (12) umfasst, gegen den anzuliegen die Endoberfläche aufgebaut ist.

## Revendications

1. En combinaison, au moins deux dispositifs de fixation (5) destinés à être installés dans une mâchoire (1), un gabarit (3), un support de dispositif de fixation (6) pour chaque dispositif de fixation conçu pour coopérer avec un élément de guidage (14) du gabarit (3) et configuré pour être assemblé avec le dispositif de fixation à l'aide d'une vis (7) et d'un pont, dans laquelle :
- le support de dispositif de fixation comprend :
i. une bride en saillie vers l'extérieur (19) qui, lorsque le dispositif de fixation est dans sa position définie dans la direction verticale (26), peut être appliquée contre une surface supérieure (20) de l'élément de guidage (14), et
ii. une partie (23) ayant une surface externe (24) agencée pour coopérer avec une surface interne (15) opposée de l'élément de guidage (14) afin de définir la position transversale (25), et
- l'extrémité apicale du support de dispositif de fixation (6) s'étend au-delà du gabarit (3) lorsque le dispositif de fixation est dans sa position définie dans la direction verticale (26),
- **caractérisée en ce que** ladite vis (7) est conçue pour s'étendre à partir de la partie supérieure (8) du support de dispositif de fixation (6), par la biais du support de dispositif de fixation (6) dans un évidement interne formé à l'intérieur de ce dernier et vers le bas dans un filetage (10) dans le dispositif de fixation (5).

2. Combinaison selon la revendication 1, **caractérisée en ce que** le support de dispositif de fixation a une partie (21) qui fait saillie au-dessus du gabarit et de l'élément de guidage, et au moyen de laquelle ou via laquelle, le dispositif de fixation et le support de dispositif de fixation sont maintenus ensemble par la vis (7).

3. Combinaison selon l'une quelconque des revendications précédentes, dans laquelle le support de dispositif de fixation (6) est configuré pour l'assemblage détachable avec le dispositif de fixation au moyen de la vis.

4. Combinaison selon la revendication 3, ladite vis ayant une tête de vis (28) et une fente de tournevis (29) agencée dans la tête de vis.

5. Combinaison selon l'une quelconque des revendications précédentes, dans laquelle le support de dispositif de fixation (6) comprend une surface d'extrémité (13) et le dispositif de fixation comprend une bride supérieure (12), contre laquelle ladite surface d'extrémité est configurée pour être appliquée.
